# FASCICULE DE BREVET EUROPEEN

(11) **EP 0 318 389 B1**
(45) Date de publication et mention de la délivrance du brevet: **17.02.1993**
(21) Numéro de dépôt: 88402961.2
(22) Date de dépôt: 24.11.1988
(51) Int. Cl.: G02B 5/10

(54) **Appareil émetteur d'un rayonnement électromagnétique notamment infrarouge**
Emissionsvorrichtung für elektromagnetische, insbesondere infrarote Strahlung
Emission device for electromagnetic, especially infrared radiation

(30) Priorité: 25.11.1987 FR 8716360
(43) Date de publication de la demande: 31.05.1989
(73) Titulaire: ASSOCIATION POUR LA RECHERCHE ET LE DEVELOPPEMENT DES METHODES ET PROCESSUS INDUSTRIELS (ARMINES), F-75272 Paris Cédex 06 (FR)
(72) Inventeur: Rabi, Ari Center for Energy, Princeton N.J. 08544 (US); Dehausse, Robert, F-94340 Joinville (FR); Clodic, Denis, F-75011 Paris (FR)
(74) Mandataire: Bruder, Michel

(56) Documents cités:
- AU-B- 523 741
- FR-A- 2 343 263
- GB-A- 1 110 073

## Description

La présente invention concerne un appareil émetteur d'un rayonnement électromagnétique notamment infrarouge comportant au moins une source cylindrique de rayons et un réflecteur

Dans un appareil émetteur de rayonnement électromagnétique notamment infrarouge, le réflecteur doit être conformé et monté par rapport à la source de rayons de telle façon qu'il n'existe pas de rayons prisonniers entre la source des rayons et le réflecteur En effet ces rayons prisonniers entrainent une perte de rendement et une surchauffe locale. En outre la forme et la disposition du réflecteur doivent lui permettre d'éliminer les réflexions multiples entre source et réflecteur qui nuisent naturellement au rendement obtenu avec l' appareil.

On connaît déjà un appareil émetteur de rayonnement infrarouge ainsi qu' il est décrit dans le brevet GB-A 1 110 073. Ce brevet concerne plus particulièrement un réflecteur pour une source de rayons infrarouges rectiligne, ce réflecteur présentant une section droite symétrique par rapport à un plan et qui est constituée, de chaque côté du plan de symétrie, de deux arcs de parabole reliés entre eux par une courbe intermédiaire constituant un arc de cercle centré sur la source cylindrique de rayons infrarouges. Dans un tel appareil émetteur de rayonnement infrarouge la forme particulière de la section droite de son réflecteur ne permet pas d'éviter les rayons prisonniers entre la source et le réflecteur et d'éliminer les réflexions multiple.

La présente invention concerne au contraire un appareil permettant de satisfaire à ces conditions et d'obtenir un rendement particulièrement élevé avec une structure remarquablement simple.

A cet effet l'invention concerne un appareil émetteur selon la revendication 1.

On décrira ci-après, à titre d'exemples non limitatifs, diverses formes d'exécution de la présente invention.

La figure 1 est une vue en coupe transversale schématique d'un appareil émetteur de rayonnement infrarouge suivant l'invention.

Les figures 2,3 et 4 sont des schémas de variantes d'exécution de l'appareil émetteur de rayonnement infrarouge.

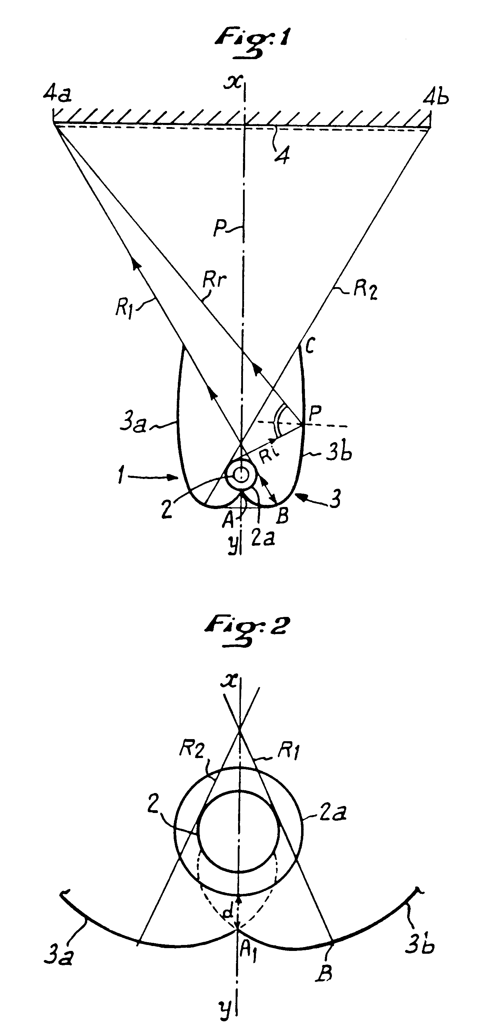

L'appareil émetteur de rayonnement représenté sur la figure 1 qui est symétrique par rapport à un plan xy perpendiculaire au plan de la figure, est désigné dans son ensemble par le référence 1. Cet appareil peut émettre n'importe quel type de rayonnement électromagnétique, notamment lumineux ou infrarouge. Dans la suite de la description l'appareil sera toutefois considéré, à titre d'exemple non limitatif, comme émettant un rayonnement infrarouge.Cet appareil comporte une source de rayons infrarouges cylindrique 2 telle qu'un filament de tungstène cylindrique enroulé en hélice entouré d'une enveloppe cylindrique coaxiale 2a telle qu'un tube de quartz et un réflecteur 3 et il projette un rayonnement infrarouge sur une cible 4.Du fait de la symétrie de l'appareil émetteur 1 l'axe de la source cylindrique 2 est contenu dans le plan xy et le réflecteur 3 est constitué de deux demi-réflecteurs à savoir un demi-réflecteur gauche 3a et un demi-réflecteur droit 3b symétriques par rapport au plan xy. La section droite de chacun des demi-réflecteurs 3a,3b qui ont des surfaces cylindriques, comprend deux parties à savoir une première partie courbe AB, en forme d'arc de développante du cercle dit cercle "émetteur" qui constitue la section droite de la source cylindrique 2 et une seconde partie courbe BC . L'extrémité A de l'arc AB est située sur l'enveloppe cylindrique externe 2a de la source de rayons infrarouges 2, dans le plan de symétrie xy de l'appareil et du côté arrière, c'est-à-dire à l'opposé de l'ouverture de sortie du rayonnement infrarouge émis par l'appareil 1. L'autre extrémité B de l'arc AB se trouve sur le rayon extrême R1 qui est tangent au cercle "émetteur" 2 et qui passe par l'extrémité gauche 4a de la cible 4, c'est-à-dire celle qui est située du côté du plan de symé trie xy opposé à celui où se trouve le demi-réflecteur droit 3b.

Du fait que l'arc AB est un arc de développante du cercle "émetteur" formant la section droite du cylindre d'enroulement du filament émetteur 2, tous les rayons tangentiels, émis par la source 2 entre le point de tangence du rayon tangentiel extrême R1 et le point A sont réfléchis sur eux-mêmes en tous les points de l'arc AB.

La section droite du demi-réflecteur droit 3b comprend une seconde partie courbe BC qui se raccorde tangentiellement à la première partie courbe AB, au point B. La forme de cette seconde partie courbe BC est telle que tous les rayons tangentiels émis à partir du cercle "émetteur" 2 et tombant sur cette partie courbe BC soient réfléchis vers l'extrémité gauche 4a de la cible 4. On a représenté sur la figure 1 un rayon tangentiel Ri émis à partir de la source cylindrique 2 et qui vient frapper le demi-réflecteur droit 3b en un point P à partir duquel il est réfléchi sous la forme d'un rayon Rr atteignant l'extrémité gauche 4a de la cible 4.

Le point C qui constitue l'extrémité de la seconde partie courbe BC, est situé sur le rayon extrême R2 qui est tangent au cercle "émetteur" 2 et qui passe par l'extrémité droite 4b de la cible 4, c'est-à-dire celle qui est située du même côté que le demi-réflecteur droit 3b par rapport au plan de symétrie xy.

D'après la description qui précède on peut voir que chacun des demi-réflecteurs 3a,3b permet d'éviter, du fait de la forme particulière de sa section droite les réflexions multiples entre source et réflecteur et le maintien de rayons quelconques prisonniers entre la source 2 et le réflecteur 3, ce qui évite ainsi des surchauffes locales et augmente considérablement le rendement de l'appareil.

Dans la variante d'exécution de l'invention représentée sur la figure 2 l'extrémité A1 de la première partie courbe A1B de la section droite de chaque demi-réflecteur n'est pas située sur l'enveloppe cylindrique externe 2a de la source 2 mais à une certaine distance d en arrière de celle-ci. Dans ce cas la développante de cercle dont la partie A1B ne constitue qu'un arc, commence sur la surface de la source cylindrique 2, en un point a1 situé à gauche du plan de symétrie xy.

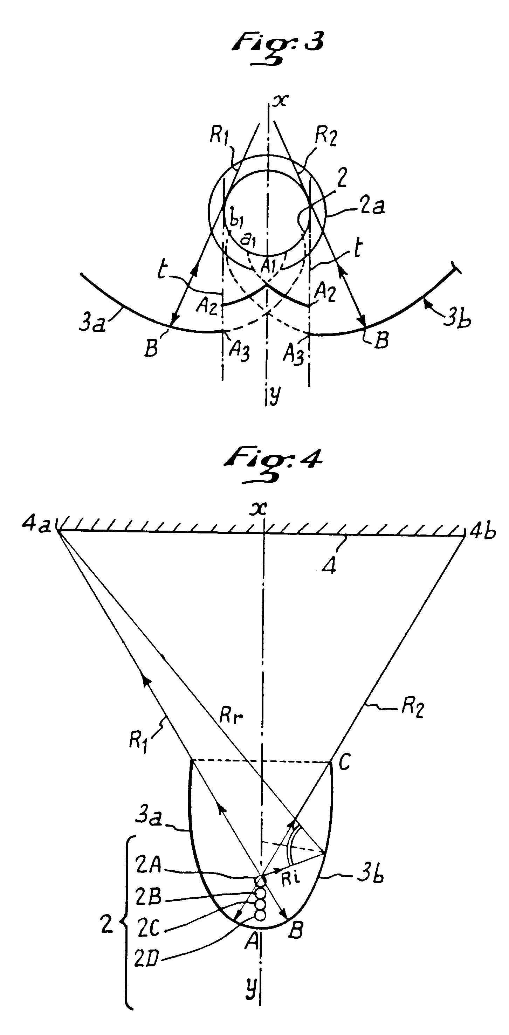

Dans la variante d'exécution de l'invention représentée sur la figure 3 la première partie courbe de la section droite de chaque demi-réflecteur 3a,3b est constituée de deux arcs de développantes différentes du cercle "émetteur", c'est-à-dire de la section droite de la source cylindrique 2, à savoir les arcs A1A2 et A3B. L'extrémité A1 de l'arc de développante de cercle A1A2 est proche de la surface de l'enveloppe 2a de la source 2, en arrière de celle-ci dans le plan de symétrie xy, et l'arc A1A2 est une portion d'une développante de cercle partant d'un point a1 situé, sur la surface externe de la source cylindrique 2, à gauche du plan de symétrie xy. Par ailleurs l'arc A3B est une portion d'une autre développante de cercle partant d'un point b1 situé, sur la surface externe, de la source cylindrique 2, au delà c'est-à-dire à gauche du point de départ a1 de la première développante de cercle. Les extrémités A2 et A3 qui sont distantes l'une de l'autre sont alignées suivant une même tangente t à la source cylindrique 2 qui est parallèle au plan de symétrie xy si bien que de ce fait aucun rayon infrarouge n'est perdu. L'intervalle ménagé entre les extrémités A2 et A3 constitue ainsi une ouverture pour le passage d'air de refroidissement de l'appareil suivant l'invention.

Dans la variante d'exécution de l'invention représentée sur la figure 4 la source 2 de rayons infrarouges est en fait constituée de plusieurs sources élémentaires cylindriques 2A,2B,2C,2D, qui sont adjacentes les unes aux autres et dont les axes sont parallèles et contenus dans le plan de symétrie xy. Ces sources élémentaires 2A 2D constituent l'équivalent d'une source bifaciale de rayonnement infrarouge : autrement dit elles peuvent être considérées comme une plaque plane émettant des rayonnements infrarouges à partir de ses deux faces opposées. Dans ce cas la première partie courbe AB de la section droite de chaque demi-réflecteur 3a,3b est constituée par un arc de cercle centré sensiblement sur la source élémentaire externe 2A c'est-à-dire celle qui est la plus proche de l'ouverture de sortie de l'appareil. L'extrémité B est située, comme dans les cas précédents, sur le rayon tangent extrême R1 qui passe par l'extrémité gauche 4a de la cible 4. La seconde partie courbe BC est constituée par un arc d'ellipse ayant pour grand axe le rayon tangent extrême R1 et pour foyers la source élémentaire externe 2A et l'extrémité gauche 4a de la cible 4. Comme précédemment l'extrémité C'est située sur la rayon tangent extrême R2 qui passe par l'extrémité droite 4b de la cible 4.

L'appareil émetteur de rayonnement suivant l'invention peut être utilisé dans tout le spectre visible et invisible et il peut notamment constituer un projecteur de faisceau lumineux, monté, par exemple, sur un véhicule automobile.

## Revendications

1. Appareil émetteur de rayonnement électromagnétique, notamment infrarouge, comportant au moins une source cylindrique de rayons et un réflecteur pour réfléchir ces rayons émis en direction d'une cible définie comme s'étendant, dans une section droite, entre deux extrémités, la source cylindrique, le réflecteur et la cible étant symétriques par rapport à un même plan de symétrie de l'appareil émetteur, si bien que le réflecteur est constitué de deux demi-réflecteurs de même section droite situées de part et d'autre du plan de symétrie contenant l'axe longitudinal de la source, caractérisé en ce que la section droite d'un demi-réflecteur (3b) située d'un premier côté du plan de symétrie (xy) comprend en partant dudit plan de symétrie (xy) une première partie courbe (AB), constituée d'au moins un arc de développante de cercle ou d'un arc de cercle, s'étendant à partir du plan de symétrie (xy) jusqu'à une extrémité (B) située sur un premier rayon extrême (R1) tangent à la source (2) sur ledit premier côte, de celle-ci et passant par une première extrémité (4a) de la cible (4) qui est située de l'autre côté du plan de symétrie (xy), et une seconde partie courbe (BC) se raccordant tangentiellement à la première partie courbe (AB) et de forme telle que tous les rayons (Ri) émis à partir de, et tangentiellement à, la source cylindrique (2) et tombant sur cette seconde partie courbe (BC) soient concentrés par réflexion vers la première extrémité (4a) de la cible située de l'autre côté du plan de symétrie, cette seconde partie courbe se terminant en un point extrême (C) situé sur un second rayon extrême (R2) tangent à la source (2), de l'autre côté du plan de symétrie (xy), et passant par la seconde extrémité (4b) de la cible (4) qui est située du premier côté du plan de symétrie (xy).

2. Appareil suivant la revendication 1 comportant une seule source cylindrique de rayons caractérisé en ce que la première partie courbe (AB) est constituée par un arc de développante du cercle "émetteur" formé par la section droite de la source cylindrique (2) partant d'un point (A) situé sur l'enveloppe externe (2a) de la source cylindrique (2) dans le plan de symétrie (xy), à l'arrière de celle-ci, c'est-à-dire à l'opposé de l'ouverture de sortie de l'appareil.

3. Appareil suivant la revendication 1 comportant une seule source cylindrique de rayons, caractérisé en ce que la première partie courbe (A1B) est constitué par un arc de développante de cercle partant d'un point (A1) qui est situé, dans le plan de symétrie (xy), à une distance (d) de l'enveloppe externe (2a) de la source cylindrique (2) en arrière de celle-ci.

4. Appareil suivant la revendication 1 comportant une seule source cylindrique de rayons, caractérisé en ce que la première partie courbe est constituée de deux arcs de développantes différentes du cercle "émetteur" formé par la section droite de la source cylindrique (2), à savoir un premier arc de développante de cercle (A1A2) s'étendant entre une première extrémité (A1) située dans le plan de symétrie (xy) et à distance de l'enveloppe externe de la source cylindrique (2) et une seconde extrémité (A2), ce premier arc de développante de cercle (A1A2) faisant partie d'une développante de cercle partant d'un point (a1) sur la surface externe de la source cylindrique (2) qui est situé du côté opposé du plan de symétrie (xy), et un second arc de développante de cercle (A3B) faisant partie d'une autre développante de cercle partant d'un point (b1) situé sur la surface externe de la source cylindrique (2), au-delà du premier point de départ (a1), la seconde extrémité (A2) du premier arc de développante de cercle (A1A2) et la première extrémité (A3) du second arc de développante de cercle (A3B) étant distantes l'une de l'autre et alignées suivant une même tangente (t) à la source cylindrique (2), tangente qui est parallèle au plan de symétrie (xy), si bien que l'intervalle ménagé entre ces extrémités (A2A3) constitue une ouverture pour le passage d'air de refroidissement.

5. Appareil suivant la revendication 1 caractérisé en ce que la source (2) de rayons est constituée de plusieurs sources élémentaires cylindriques (2A,2B,2C,2D) qui sont adjacentes les unes aux autres et dont les axes sont parallèles et contenus dans le plan de symétrie (xy) la première partie courbe (AB) de la section droite du demiréflecteur (3a,3b) est constituée par un arc de cercle contré sensiblement sur la source élémentaire externe (2A) c'est-à-dire celle qui est la plus proche de l'ouverture de sortie de l'appareil, et la seconde partie courbe (BC) est constituée par un arc d'ellipse ayant pour grand axe le premier rayon tangent extrême (R1) et pour foyers la source élémentaire externe (2A) et la première extrémité (4a) de la cible (4).

## Claims

1. Apparatus emitting an electromagnetic radiation, particularly infrared, comprising at least one cylindrical source of rays and a reflector for reflecting these rays emitted in the direction of a target defined as extending, in a cross section, between two ends, the cylindrical source, the reflector and the target being symmetrical with respect to the same plane of symmetry of the emitter apparatus, so that the reflector is constituted by two half-reflectors of the same cross section located on either side of the plane of symmetry containing the longitudinal axis of the source, characterized in that the cross section of a half-reflector (3b), located on a first side of the plane of symmetry (xy), comprises, starting from said plane of symmetry (xy), a first curved part (AB) constituted by at least one arc of involute to a circle or by an arc of circle, extending from the plane of symmetry (xy) to an end (B) located on a first extreme ray (R1) tangential to the source (2) on said first side thereof and passing through a first end (4a) of the target (4) which is located on the other side of the plane of symmetry (xy), and a second curved part (BC) joined tangentially to the first curved part (AB) and of such shape that all the rays (Ri) emitted from, and tangentially to the cylindrical source (2) and falling on this second curved part (BC) are concentrated by reflexion towards the first end (4a) of the target located on the other side of the plane of symmetry, this second curved part terminating at an extreme point (C) located on a second extreme ray (R2) tangential to the source (2), on the other side of the plane of symmetry (xy), and passing through the second end (4b) of the target (4) which is located on the first side of the plane of symmetry (xy).

2. Apparatus according to Claim 1, comprising a single cylindrical source of rays, characterized in that the first curved part (AB) is constituted by an arc of involute to the "emitter" circle formed by the cross section of the cylindrical source (2), starting from a point (A) located on the outer envelope (2a) of the cylindrical source (2) in the plane of symmetry (xy), to the rear thereof, i.e. opposite the outlet aperture of the apparatus.

3. Apparatus according to Claim 1, comprising a single cylindrical source of rays, characterized in that the first curved part (A1B) is constituted by an arc of involute to a circle starting from a point (A1) which is located, in the plane of symmetry (xy), at a distance (d) from the outer envelope (2a) of the cylindrical source (2), to the rear thereof.

4. Apparatus according to Claim 1, comprising a single cylindrical source of rays, characterized in that the first curved part is constituted by two arcs of different involutes to the "emitter" circle formed by the cross section of the cylindrical source (2), namely a first arc of involute to a circle (A1A2) extending between a first end (A1) located in the plane of symmetry (xy) and at a distance from the outer envelope of the cylindrical source (2) and a second end (A2), this first arc of involute to a circle (A1A2) forming part of an involute to a circle starting from a point (a1) on the outer surface of the cylindrical source (2) which is located on the opposite side of the plane of symmetry (xy), and a second arc of involute to a circle (A3B) forming part of another involute to a circle starting from a point (b1) located on the outer surface of the cylindrical source (2), beyond the first point of departure (a1), the second end (A2) of the first arc of involute to a circle (A1A2) and the first end (A3) of the second arc of involute to a circle (A3B) being distant from each other and aligned along the same tangent (t) to the cylindrical source (2), which tangent is parallel to the plane of symmetry (xy), so that the space arranged between these ends (A2A3) constitutes an opening for the passage of cooling air.

5. Apparatus of Claim 1, characterizd in that the source (2) of rays is constituted by a plurality of cylindrical elementary sources (2A, 2B, 2C, 2D) which are adjacent one another and whose axes are parallel and contained in the plane of symmetry (xy), the first curved part (AB) of the cross section of the halfreflector (3a, 3b) is constituted by an arc of circle centred substantially on the other elementary source (2A), i.e. the one which is closest the outlet aperture of the apparatus, and the second curved part (BC) is constituted by an arc of ellipse having for major axis the first extreme tangential ray (R1) and for foci the outer elementary source (2A) and the first end (4a) of the target (4).

## Patentansprüche

1. Vorrichtung zur Emission elektromagnetischer, insbesondere infraroter Strahlung, mit mindestens einer zylindrischen Strahlungsquelle und einem Reflektor zum Reflektieren der emittierten Strahlung in Richtung auf ein Target, welches als sich in einem geraden Abschnitt zwischen zwei Enden erstreckend definiert ist, wobei die zylindrische Strahlungsquelle, der Reflektor und das Target bezüglich ein und derselben Symmetrieebene der Emissionsvorrichtung symmetrisch sind, so daß der Reflektor durch zwei Reflektorhälften gleichen Querschnitts gebildet wird, die sich auf entgegengesetzten Seiten der Symmetrieebene befinden, welche die Längsachse der Quelle enthält, **dadurch gekennzeichnet,** daß der Querschnitt der einen Reflektorhälfte (3b), die sich auf einer ersten Seite der Symmetriebene (xy) befindet, ausgehend von dieser Symmetriebene (xy) einen ersten gebogenen Teil (AB) enthält, der durch mindestens einen kreisevolventen Bogen oder einen Kreisbogen gebildet wird, sich von der Symmetrieebene (xy) bis zu einem Ende (B) erstreckt, welches auf einem ersten Randstrahl (R1) liegt, der die Quelle (2) auf ihrer ersten Seite tangiert und durch ein erstes Ende (4a) des Targets (4) geht, das sich auf der anderen Seite der Symmetrieebene (xy) befindet, und ferner einen zweiten gebogenen Teil (BC), der tangential am ersten gebogenen Teil (AB) ansetzt und eine solche Form hat, daß alle Strahlen (Ri), die von der zylindrischen Quelle (2) und tangential von dieser emittiert werden und auf diesen zweiten gebogenen Teil (BC) fallen, durch Reflexion auf das erste Ende (4a) des Targets konzentriert werden, das sich auf der anderen Seite der Symmetrieebene befindet, wobei der zweite gebogene Teil an einem Endpunkt (C) endet, der auf einem zweiten Randstrahl (R2) liegt, der die Quelle (2) auf der anderen Seite der Symmetrieebene (xy) tangiert und durch das zweite Ende (4b) des Targets (4) geht, das sich auf der ersten Seite der Symmetrieebene (xy) befindet.

2. Vorrichtung nach Anspruch 1 mit einer einzigen zylindrischen Strahlungsquelle, **dadurch gekennzeichnet,** daß der erste gebogene Teil (AB) aus einem "Emitter"-kreisevolventen Bogen besteht, der durch den Querschnitt der zylindrischen Quelle (2) gebildet wird ausgehend von einem Punkt (A) auf dem äußeren Umfang (2a) der zylindrischen Quelle (2) in der Symmetrieebene (xy) hinter dieser, d.h. auf der der Austrittsöffnung der Vorrichtung entgegengesetzten Seite.

3. Vorrichtung nach Anspruch 1 mit einer einzigen zylindrischen Strahlungsquelle, **dadurch gekennzeichnet,** daß der erste gebogene Teil (A1B) durch einen kreisevolventen Bogen gebildet wird, der von einem Punkt (A1) ausgeht, der sich in der Symmetrieebene (xy) in einem Abstand (d) vom Außenumfang (2a) der zylindrischen Quelle (2) hinter dieser befindet.

4. Vorrichtung nach Anspruch 1 mit einer einzigen zylindrischen Strahlungsquelle, **dadurch gekennzeichnet,** daß der erste gebogene Teil aus zwei verschiedenen "Emitter"-kreisevolventen Bögen besteht, welche durch den Querschnitt der zylindrischen Quelle (2) gebildet werden, nämlich einem ersten kreisevolventen Bogen (A1A2), der sich zwischen einem ersten Ende (A1), das sich in der Symmetrieebene (xy) und im Abstand vom Außenumfang der zylindrischen Quelle (2) befindet, und einem zweiten Ende (A2) erstreckt, wobei der erste kreisevolvente Bogen (A1A2) einen Teil einer Kreisevolvente bildet, die von einem Punkt (a1) auf der äußeren Oberfläche der zylindrischen Quelle (2) ausgeht, der sich auf der entgegengesetzten Seite der Symmetrieebene (xy) befindet, und einem zweiten kreisevolventen Bogen (A3B), der einen Teil einer anderen Kreisevolvente bildet, die von einem Punkt (b1) ausgeht, der sich auf der äußeren Oberfläche der zylindrischen Quelle (2) jenseits des ersten Ausgangspunktes (a1) befindet, wobei das zweite Ende (A2) des ersten kreisevolventen Bogens (A1A2) und das erste Ende (A3) des zweiten kreisevolventen Bogens (A3B) voneinander beabstandet sind und auf ein und derselben Tangente (t) der zylindrischen Quelle (2) liegen, welche Tangente parallel zur Symmetrieebene (xy) verläuft, so daß der zwischen diesen Enden (A2A3) gebildete Zwischenraum eine Öffnung für den Durchtritt von Kühlluft bildet.

5. Vorrichtung nach Anspruch 1, **dadurch gekennzeichnet,** daß die Strahlungsquelle (2) aus mehreren elementaren zylindrischen Quellen (2A,2B,2C,2D) gebildet wird, die einander benachbart sind und deren Achsen parallel sind und in der Symmetrieebene (xy) enthalten sind, daß der erste gebogene Teil (AB) des Querschnitts einer Reflektorhälfte (3a,3b) durch einen Kreisbogen gebildet wird, der im wesentlichen bezüglich der äußeren elementaren Quelle (2A) zentriert ist, d.h. derjenigen, die der Austrittsöffnung der Vorrichtung am nächsten benachbart ist, und daß der zweite gebogene Teil (BC) durch einen Ellipsenbogen gebildet wird, der als große Achse den ersten tangentialen Randstrahl (R1) und als Brennpunkte die äußere elementare Quelle (2A) und das erste Ende (4A) des Targets (4) hat.
